# EUROPEAN PATENT APPLICATION

(11) **EP 4 443 611 A1**
(43) Date of publication of application: **09.10.2024**
(21) Application number: 22901075.6
(22) Date of filing: 15.11.2022
(51) Int. Cl.: H01M 10/6554, H01M 10/613, H01M 10/6235, H01M 10/625, H01M 10/643, H01M 10/653, H01M 10/6551, H01M 50/204, H01M 50/213, H01M 50/227, H01M 50/247, H01M 50/249, H01M 50/526

(54) **BATTERY PACK, ELECTRIC TOOL, AND ELECTRIC VEHICLE**

(30) Priority: 30.11.2021 JP 2021194076
(71) Applicant: MURATA MANUFACTURING CO., LTD., Nagaokakyo-shi, Kyoto 617-8555 (JP)
(72) Inventor: SUGIYAMA, Masaaki, Kyoto 6178555 (JP)
(74) Representative: Witte, Weller & Partner Patentanwälte mbB
(86) International application number: PCT/JP2022/042354
(87) International publication number: WO 2023/100642

(57) **Abstract**

Provided is a battery pack with improved thermal conductivity to a battery holder.

The battery pack includes a battery unit including one or a plurality of cells, an exterior case that accommodates the battery unit, and a battery holder made from resin. The battery holder has a cell accommodating portion that accommodates the cells, a metal plate is interposed between an inner surface of the cell accommodating portion and the cell, and the metal plate is attached to the cell so as to cover a part of a peripheral surface of the cell.

## Description

### TECHNICAL FIELD

The present invention relates to a battery pack, an electric tool, and an electric vehicle.

### BACKGROUND ART

In a battery pack including a battery (hereinafter, also referred to as a cell as appropriate) such as a lithium ion battery, a cell is often accommodated in a battery holder and used. Further, in a battery pack, it is also desired to effectively dissipate heat of a cell generated at the time of use. For example, Patent Document 1 below discloses a technique in which a cell is accommodated in a battery holder having spring property to improve close contact property between the battery holder and the cell and improve thermal conductivity from the cell to the battery holder.

### PRIOR ART DOCUMENT

### PATENT DOCUMENT

Patent Document 1: Japanese Patent Application Laid-Open No. 2016-207569

### SUMMARY OF THE INVENTION

### Problem to be solved by the invention

An insulating member such as polyvinyl chloride (PVC) is wound around metal (battery can) constituting a periphery of a cell. In such a configuration, since a thermal conductivity to a periphery of the cell is low, it has been difficult to effectively transfer heat to a battery holder when close contact property between the cell and the battery holder is improved as described in Patent Document 1.

Therefore, an object of the present invention is to provide a battery pack having improved thermal conductivity to a battery holder, an electric tool including the battery pack, and an electric vehicle.

### Means for solving the problem

The present invention is a battery pack including:
a battery unit including one or a plurality of cells;
an exterior case that accommodates the battery unit; and
a battery holder made from resin.

The battery holder includes a cell accommodating portion that accommodates the cell,
a metal plate is interposed between an inner surface of the cell accommodating portion and the cell, and
the metal plate is attached to the cell so as to cover a part of a peripheral surface of the cell.

### Advantageous effect of the invention

According to at least an embodiment of the present invention, it is possible to provide a battery pack having improved thermal conductivity to a battery holder. Note that content of the present invention is not to be construed in a manner limited by an effect exemplified in the present description.

### BRIEF EXPLANATION OF DRAWINGS

FIG. 1 is a diagram referred to in description of a problem to be considered in the present invention.
FIG. 2 is an exploded perspective view of a battery pack according to an embodiment.
FIG. 3 is a diagram to be referred to when details of a cell, a metal plate, and a heat dissipation diffusion coating material according to the embodiment are described.
FIG. 4 is a diagram to be referred to when details of the cell, the metal plate, and the heat dissipation diffusion coating material according to the embodiment are described.
FIG. 5 is a diagram to be referred to when details of the cell, the metal plate, and the heat dissipation diffusion coating material according to the embodiment are described.
FIG. 6 is a diagram to be referred to when details of the cell, the metal plate, and the heat dissipation diffusion coating material according to the embodiment are described.
FIG. 7 is a diagram for explaining an effect obtained by the embodiment.
FIG. 8 is a diagram for describing a variation.
FIG. 9 is a diagram for describing a variation.
FIG. 10 is a diagram for describing a variation.
FIG. 11 is a diagram for describing a variation.
FIG. 12 is a diagram for describing an application example of the present invention.
FIG. 13 is a diagram for describing an application example of the present invention.

### MODE FOR CARRYING OUT THE INVENTION

Hereinafter, an embodiment and the like of the present invention will be described with reference to the drawings. Note that, the description will be given in order below.

### <Problem to be considered>

### <Embodiment>

### <Variation>

### <Application example>

The embodiment and the like described below are a preferred specific example of the present invention, and content of the present invention is not limited to the embodiment and the like.

Note that, a member illustrated in the claims is not identified as a member of the embodiment. In particular, unless otherwise described, the scope of the present invention is not intended to be limited to only dimensions, materials, and shapes of constituent members described in the embodiment, relative arrangements of these, and description of directions such as upward, downward, left, and right and the like, which are merely illustrative examples. Note that, sizes, positional relationships, and the like of members illustrated in the drawings may be exaggerated for clarity of description, and, only some of reference numerals may be illustrated, or a part of an illustration may be simplified, in order to prevent the illustration from being complicated. Moreover, in description below, the same names and reference numerals represent identical members or members having the same quality, and redundant description of these are omitted as appropriate. Furthermore, for each element constituting the present invention, an aspect may be employed such that one member also serves as multiple elements constituted by the same member, or conversely, a function of one member can be shared and realized by a plurality of members.

### <Problem to be considered>

First, for easy understanding of the present invention, a problem to be considered in the present invention will be described. As described above, in a configuration of a general cell, since thermal conductivity to the surroundings is low, heat generated from the cell cannot be effectively transferred to a battery holder.

As one of solutions to this point, it is conceivable to wind a metal plate having high thermal conductivity around the entire peripheral surface of a cell. However, according to this method, since a metal plate is wound around a peripheral surface of a cell, weight of a battery pack may increase particularly when the number of cells increases.

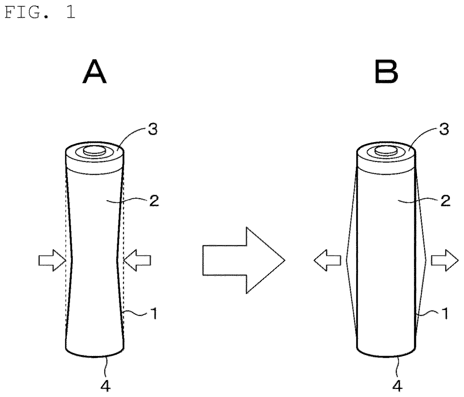

In a case of a chargeable and dischargeable secondary battery such as a lithium ion cell, a shape of a cell is deformed from an initial state before start of use after a charge and discharge cycle is repeated. FIG. 1A is a diagram schematically illustrating a cell (cell 1) of a lithium ion battery in an initial state. While the cell 1 repeats charging and discharging, a peripheral surface 2 of the cell 1 repeats expansion and contraction as illustrated in FIG. 1B. By the above, the cell 1 is slightly deformed. Deformation of a terminal surface (specifically, a terminal surface on which a positive electrode terminal 3 is formed and a terminal surface on which a negative electrode terminal 4 is formed) of the cell 1 is little as compared with deformation (expansion or contraction) of the peripheral surface 2 of the cell 1. Therefore, a battery holder is designed in consideration of contact with a terminal surface having a relatively stable shape. From another point of view, in a case where a metal plate is wound around the peripheral surface 2 of the cell 1 as described above, since deformation of the peripheral surface 2 is significant, there is a possibility that the metal plate cannot follow the deformation. As a result, an air layer is formed between the cell 1 and the metal plate, and there is a possibility that heat of the cell 1 cannot be effectively transferred to the battery holder although the metal plate is wound.

As described above, in a case where a metal plate is attached to a peripheral surface of a cell, the metal plate is desired to be able to follow deformation associated with use of the cell as much as possible while increase in weight of a battery pack is reduced. Based on the above, the present invention will be described in detail with reference to an embodiment.

### <Embodiment>

### [Configuration example of battery pack]

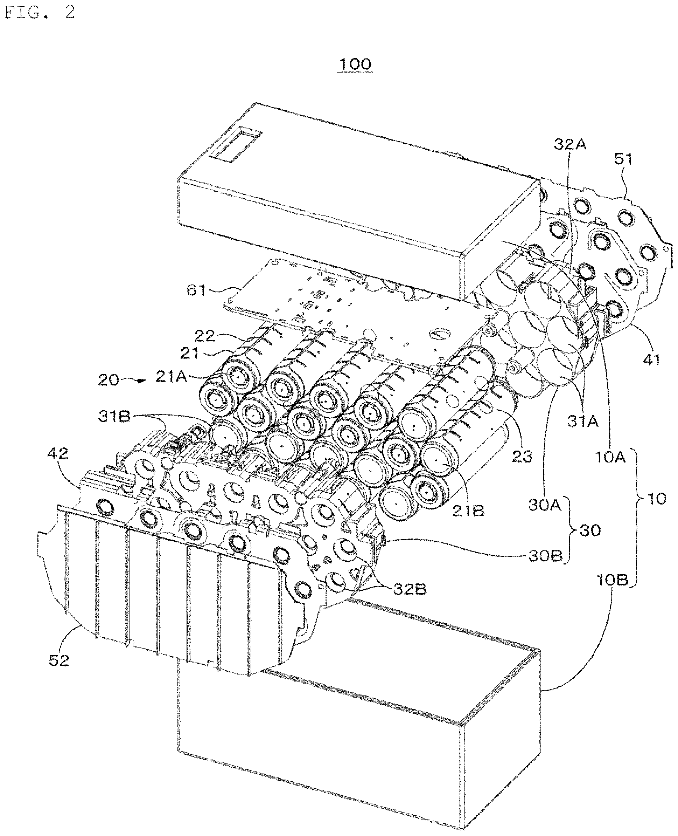

A battery pack (battery pack 100) according to an embodiment roughly has a box shape as a whole. FIG. 2 is an exploded perspective view of the battery pack 100 according to the embodiment. The battery pack 100 includes, for example, an exterior case 10, a battery unit 20, a battery holder 30, a tab 41, a tab 42, a heat sink 51, and a heat sink 52.

The exterior case 10 is formed of resin, for example. The exterior case 10 according to the present embodiment has a box shape and includes an exterior upper case 10A and an exterior lower case 10B divided in a vertical direction. The exterior case 10 accommodates the battery unit 20, the battery holder 30, and the like in the inside. An external output terminal (not illustrated) is provided at an appropriate position on an outer surface of the exterior case 10. Via the external output terminal, output of the battery pack 100 is supplied to a load, and charging of the battery pack 100 is performed.

The battery unit 20 includes one or a plurality of the cells 21. The cell 21 is, for example, a lithium ion battery having a cylindrical shape, but is not limited to this. The battery unit 20 according to the present embodiment has, for example, 20 of the cells 21. A positive electrode terminal 21A is formed on one end surface of the cell 21, and a negative electrode terminal 21B is formed on another end surface of the cell 21. Note that, in a case where either the positive electrode terminal 21A or the negative electrode terminal 21B may be used, the terminal may be simply referred to as a terminal portion.

Although details will be described later, a metal plate 22 is attached to each of the cells 21 so as to cover a part of a peripheral surface of the cell 21. Further, a surface (outer surface) of the metal plate 22 is covered with a heat dissipation diffusion coating material 23.

The battery holder 30 is made from resin. The battery holder 30 is divided into two battery holders 30A and 30B. The battery holder 30 is constituted by engagement between the battery holder 30A and the battery holder 30B. The battery holder 30A includes a cell accommodating portion 31A that accommodates one half (back side half in FIG. 2) of the cell 21. Further, the battery holder 30B includes a cell accommodating portion 31B that accommodates one half (front side half in FIG. 2) of the cell 21. When the battery holder 30A and the battery holder 30B are engaged with each other, a continuous cylindrical space (hereinafter, also referred to as a cell accommodating portion 31 as appropriate) is formed by the cell accommodating portions 31A and 31B, and the cell 21 is accommodated in this space. In a state where the cell 21 is accommodated in the cell accommodating portion 31, the metal plate 22 described above is interposed between an inner surface of the cell accommodating portion 31 and a peripheral surface of the cell 21. A hole portion 32A for exposing a terminal portion is formed in a bottom portion (a wall portion on the side opposite to an open end) of the cell accommodating portion 31A. A hole portion 32B for exposing a terminal portion is formed in a bottom portion (a wall portion on the side opposite to an open end) of the cell accommodating portion 31B.

The tab 41 is a metal plate welded to a terminal portion exposed from the hole portion 32A of the battery holder 30A. The tab 42 is a metal plate welded to a terminal portion exposed from the hole portion 32B of the battery holder 30B. As a material of the tabs 41 and 42, for example, a metal material such as aluminum (Al), copper (Cu), nickel (Ni), or stainless steel can be used. As a welding method, resistance welding, ultrasonic welding, or the like can be used. As a predetermined portion of the tabs 41 and 42 is welded to a terminal portion, 20 of the cells 21 are connected to each other. In the present embodiment, 10 blocks of two of the cells 21 connected in parallel are connected in series. A predetermined portion of the tabs 41 and 42 is electrically connected to an external output terminal of the battery pack 100 via a circuit board 61.

The heat sink 51 is arranged between the tab 41 and a predetermined inner surface of the exterior case 10 (for example, the exterior lower case 10B). The heat sink 52 is arranged between the tab 42 and a predetermined inner surface of the exterior case 10 (for example, the exterior lower case 10B). The heat sinks 51 and 52 can effectively dissipate heat transferred from the battery unit 20 to the tabs 41 and 42 to the exterior case 10.

The circuit board 61 is a substrate on which circuit elements such as an integrated circuit (IC) for protection operation of the battery pack 100 and a field effect transistor (FET) are mounted.

### [Details of cell, metal plate, and heat dissipation diffusion coating material]

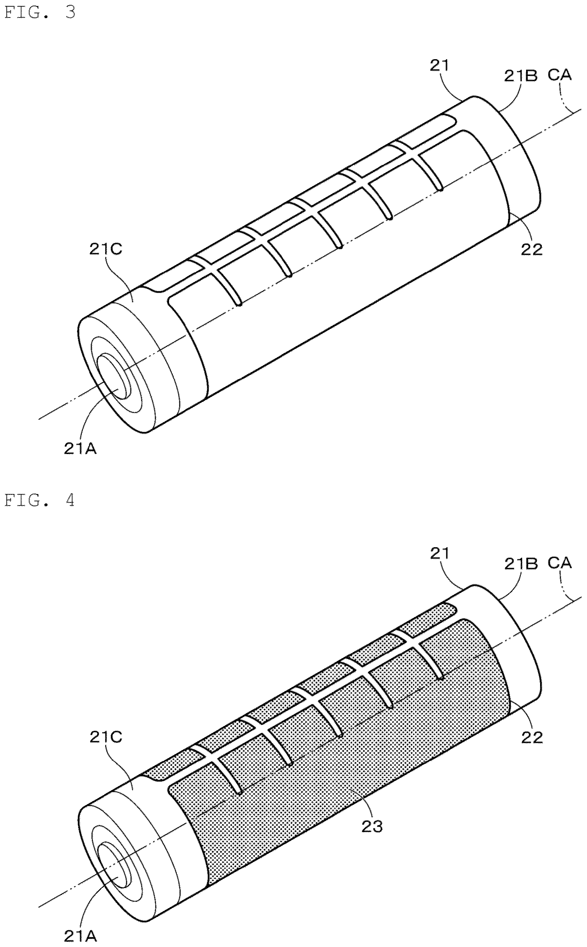

Next, details of the cell 21, the metal plate 22, and the heat dissipation diffusion coating material 23 will be described with reference to FIGS. 3 to 6. FIG. 3 is a perspective view of one of the cells 21. As illustrated in FIG. 3, a central axis CA can be set in a longitudinal direction for the cell 21 having a cylindrical shape.

The metal plate 22 is attached so as to be wound around a peripheral surface (peripheral surface 21C) of the cell 21. The metal plate 22 is attached so as to cover a part of the peripheral surface 21C. In the present embodiment, the metal plate 22 is attached so as to cover a large portion of the peripheral surface 21C. As illustrated in FIG. 4, the heat dissipation diffusion coating material 23 is applied to an outer surface of the metal plate 22, and the outer surface of the metal plate 22 is covered with the heat dissipation diffusion coating material 23. Note that, in FIG. 4, the heat dissipation diffusion coating material 23 is indicated by dots (points).

The metal plate 22 is attached to the cell 21 as described below, for example. First, the heat dissipation diffusion coating material 23 is applied to an outer surface of the metal plate 22. After the heat dissipation diffusion coating material 23 is dried, the metal plate 22 is bent into a tubular shape. After the above, the cell 21 is inserted (press-fitted) from one open end toward another open end of the metal plate 22 bent into a tubular shape. By the above, a large portion of the peripheral surface 21C of the cell 21 is covered with the metal plate 22.

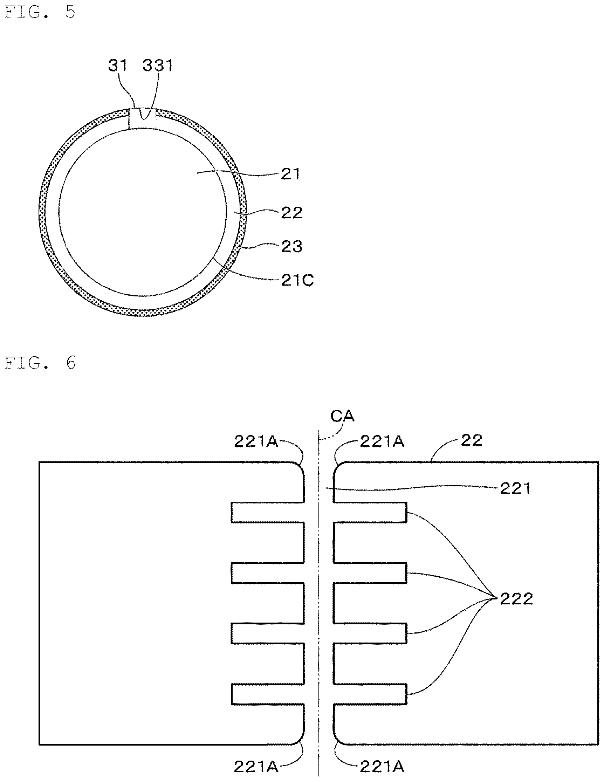

The cell 21 and the like illustrated in FIG. 4 are inserted (press-fitted) into the cell accommodating portion 31 of the battery holder 30. FIG. 5 is a diagram of a state in which the cell 21 and the like illustrated in FIG. 4 are accommodated in the cell accommodating portion 31 of the battery holder 30 as viewed from the bottom portion side of the battery holder 30A (or the battery holder 30B). Note that, in FIG. 5, only a periphery of one of the cells 21 is illustrated, and illustration of a bottom portion of the battery holder 30A (or the battery holder 30B) is appropriately omitted.

As illustrated in FIG. 5, the metal plate 22 is interposed between the peripheral surface 21C of the cell 21 and an inner surface 331 of the cell accommodating portion 31. Since a layer (coating film) of the heat dissipation diffusion coating material 23 is extremely thin, it can be understood that the metal plate 22 and the inner surface 331 of the cell accommodating portion 31 are in contact with each other with the heat dissipation diffusion coating material 23 interposed between them. That is, the metal plate 22 is in contact with the battery holder 30 with the heat dissipation diffusion coating material 23 interposed between them.

### (Shape of metal plate)

Next, an example of a shape of the metal plate 22 will be described. As described above, the cell 21 (particularly, the peripheral surface 21C of the cell 21) may be deformed by repetition of charging and discharging. Therefore, the metal plate 22 preferably has a shape by which the metal plate 22 can follow deformation of the cell 21 and maintain close contact property with the cell 21 as much as possible.

FIG. 6 is a diagram for explaining a shape of the metal plate 22 according to the present embodiment. As illustrated in FIG. 6, the metal plate 22 has a first slit 221 extending in a direction along the central axis CA (lateral direction of the metal plate 22) in a state of being attached to the cell 21. An end portion of the first slit 221 is chamfered so that a rounded portion 221A is formed.

Further, the metal plate 22 has a second slit 222 extending in a direction substantially orthogonal to an extending direction of the first slit 221 (a direction along a longitudinal direction of the metal plate 22). In the present embodiment, the metal plate 22 has a plurality (four) of the second slits 222 formed at substantially equal intervals.

### (Material of metal plate)

Next, a material of the metal plate 22 will be described. Table 1 below shows "Material name", "Density", "Specific heat", "Thermal conductivity", and "Specific electric resistance" of metal considered as a material of the metal plate 22.

**[Table 1]**

| <I. Metal> | | | | |
|---|---|---|---|---|
| Material name | Density [pkg/m³] | Specific heat [kJ/(kg·K)] | Thermal conductivity [λW/(m·K)] | Specific electric resistance [Ωm(10-8)] |
| Silver | 10490 | 0.234 | 418 | 1.47 |
| Copper | 8960 | 0.385 | 386 | 1.55 |
| Gold | 19320 | 0.13 | 295 | |
| Pure aluminum | 2700 | 0.9 | 204 | 3.55 |
| Tungsten | 19300 | 0.134 | 198 | |
| Duralumin | 2790 | 0.84 | 164 | |
| Zinc | 7130 | 0.383 | 113 | |
| Brass (copper 70%, zinc 30%) | 8500 | 0.381 | 112.02 | |
| SPCC | 7870 | 0.481 | 73.3 | 13 |
| Iron | 7870 | 0.461 | 67 | 8.9 |
| 99% or less Nickel | 8350 | 0.452 | 59.01 | |
| Solder (50 Sn) | 9000 | 0.176 | 49 | |
| Cast iron | 7280 | 0.461 | 48 | |
| SUS304 | 7920 | 0.499 | 17.6 | 72 |
| Titanium | 4540 | 0.528 | 17 | |
| Chromium nickel copper 18/8 | 7820 | 0.502 | 16 | |

As illustrated in FIG. 5, the metal plate 22 is in contact with the battery holder 30 with the heat dissipation diffusion coating material 23 interposed between them. With such a configuration, in order to effectively transfer heat generated from the cell 21 to the battery holder 30 and dissipate the heat, the metal plate 22 is preferably made from a material having a high thermal conductivity. Further, in consideration of weight reduction of the battery pack 100, the metal plate 22 is preferably made from a material having a low density. Further, a material obtained at low cost is preferable.

In consideration of Table 1 and the viewpoint described above, a material of the metal plate 22 is preferably any of silver, copper, gold, aluminum, or an alloy containing at least one of these, having a thermal conductivity of 200 or more. Among them, aluminum is more preferable as a material of the metal plate 22 from the viewpoint of weight reduction (low density) and cost.

### (Material of heat dissipation diffusion coating material)

Next, a material of the heat dissipation diffusion coating material 23 will be described. The heat dissipation diffusion coating material 23 is obtained by adding a heat dissipation powder filler to resin dissolved in a solvent. Examples of the resin include alkyd-based resin, polyurethane-based resin, acrylic resin, epoxy-based resin, and fluorine-based resin. Among them, the resin constituting the heat dissipation diffusion coating material 23 is preferably acrylic resin or fluorine-based resin. A reason for the above is that acrylic resin has excellent weather resistance, can impart gloss to a coating film, and is strong against acid and alkali and hardly discolored. Further, fluorine-based resin has extremely excellent weather resistance and a long life as a coating material. Further, fluorine-based resin is excellent in water resistance and chemical resistance. Further, acrylic resin and fluorine-based resin have high close contact property.

A solvent used for the heat dissipation diffusion coating material 23 can be roughly classified into "strong solvent", "weak solvent", and "aqueous". Examples of the "strong solvent" include toluene, xylene, ester, and ketone. Examples of the "weak solvent" include a turpentine-based solvent (a component close to kerosene). Any solvent may be used for the heat dissipation diffusion coating material 23.

As the heat dissipation powder filler (high heat dissipation powder filler) added to the heat dissipation diffusion coating material 23, carbon black or a nano-dispersed ceramic-based filler is used. Among them, a nano-dispersed ceramic-based filler is preferable. A configuration used for the battery pack 100 preferably has high insulation property. Carbon black behaves as a resistor of A (optional value) × 10^{-XX}(Ω), whereas a ceramic-based filler behaves as an insulator having a high resistance value of A × 10^{1X}(Ω). Therefore, in consideration of insulating property, the heat dissipation powder filler to be added to the heat dissipation diffusion coating material 23 is preferably a ceramic-based filler.

### [Effect obtained by present embodiment]

According to the present embodiment described above, an effect below can be obtained.

A cell to which a metal plate is attached so as to cover a peripheral surface is accommodated in a cell accommodating portion so as to be in contact with a battery holder. By the above, heat generated from the cell can be effectively transferred to the battery holder by the metal plate, and heat dissipation of the entire battery pack is improved. Further, since a part of a peripheral surface is covered with the metal plate, it is possible to prevent weight of the battery pack from becoming large.

Further, by providing a first slit in a direction along a central axis with respect to the metal plate, it is possible to improve followability of the metal plate to a shape change of the cell in a direction perpendicular to the central axis. Further, by providing a second slit in the metal plate, it is possible to improve followability of the metal plate to variation in shape change in a direction perpendicular to the central axis. As illustrated in FIG. 1B, when a terminal portion of a cell is set in a vertical direction, degree of deformation is small in the vicinity of the terminal portion, whereas degree of deformation increases as a distance from the terminal portion increases and becomes largest in the vicinity of the center. By provision of the second slit, the metal plate can effectively follow variation in the degree of deformation. As described above, by providing the slit in the metal plate, it is possible to improve the followability to a shape change of the cell due to expansion and contraction. Since the followability of the metal plate to a shape change of the cell can be improved, close contact property of the metal plate to the cell can be maintained as much as possible in a case where a shape of the cell changes or in a case where an external impact is applied. Further, by provision of a rounded portion at an end portion of the first slit, the cell can be smoothly press-fitted when the cell is press-fitted into the metal plate bent into a cylindrical shape, and a terminal surface and a peripheral surface of the cell can be prevented from being damaged by the metal plate at the time of the press-fitting.

By using aluminum having a high thermal conductivity and light weight as a material of the metal plate, it is possible to reduce increase in weight of a battery pack due to use of the metal plate as much as possible. In particular, winding a thick metal plate around a cell causes increase in weight of a battery pack, but according to the present embodiment, close contact property to the cell can be maintained in a case where a thickness of the metal plate is small (for example, 0.4 mm or less), so that weight increase of the battery pack can be reduced as much as possible. Further, heat generated from the cell can be effectively transferred to the battery holder. That is, heat can be effectively diffused if the cell has a structure with low thermal conductivity and heat dissipation (for example, a structure in which steel plate cold commercial is used as a battery can and a periphery of the battery can is covered with vinyl chloride). Further, the use of the metal plate can reduce thermal resistance of the entire battery pack.

Furthermore, by covering the metal plate with a heat dissipation diffusion coating material, heat dissipation can be further improved. By the above, heat can be more effectively propagated to the battery holder as compared with when the metal plate is used alone.

From the viewpoint of improving heat dissipation, it is also conceivable to directly apply the heat dissipation diffusion coating material to a peripheral surface of the cell. However, when painted configurations are stacked on each other or vinyl chloride film provided on a peripheral surface of the cell and the heat dissipation diffusion coating material are left in contact with each other, there is a possibility of causing a blocking phenomenon in which an adhesive surface becomes sticky. In the present embodiment, since the heat dissipation diffusion coating material is applied to an outer surface of the metal plate, there is no possibility that the blocking phenomenon occurs.

Further, from a relationship between compressive stress (for example, 78 MPa or more) on the battery holder side and compressive stress (for example, 40 to 70 MPa) of the heat dissipation diffusion coating material, a coating film of the heat dissipation diffusion coating material becomes an elastic body of a certain degree when the cell is press-fitted into the cell accommodating portion. By the above, close contact property between the battery holder and the cell can be improved, so that thermal conductivity can be improved.

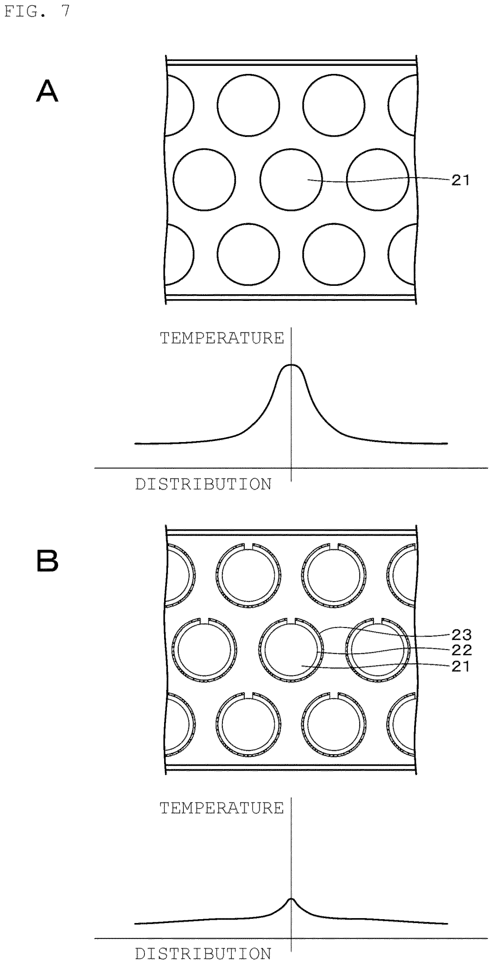

Further, as illustrated in FIG. 7A, in a case where a plurality of cells (indicated by a circle in FIG. 7) are arranged in an exterior case, in particular, it is difficult to dissipate heat generated from a cell located near the center away from the exterior case, and a temperature in the exterior case is locally elevated. On the other hand, in the present embodiment, as illustrated in FIG. 7B, by covering a part of a peripheral surface of an individual cell with the metal plate and applying the heat dissipation diffusion coating material, it is possible to prevent a local temperature rise in the exterior case and to average temperatures in the exterior case. Note that, in FIGS. 7A and 7B, illustration of the battery holder and the like is omitted and the diagrams are simplified as appropriate.

Further, insulation can be ensured as the metal plate is covered with the heat dissipation diffusion coating material. By the above, safety can be improved as compared with a configuration in which the metal plate attached to the cell is exposed without being covered.

### <Variation>

Although the embodiment of the present invention is specifically described above, the content of the present invention is not limited to the embodiment described above, and it is possible to make various modifications based on the technical idea of the present invention. Hereinafter, a plurality of variations will be described. Note that, the same configurations as those in the embodiment are denoted by the same reference numerals, and redundant description will be omitted as appropriate.

### [Variation of slit]

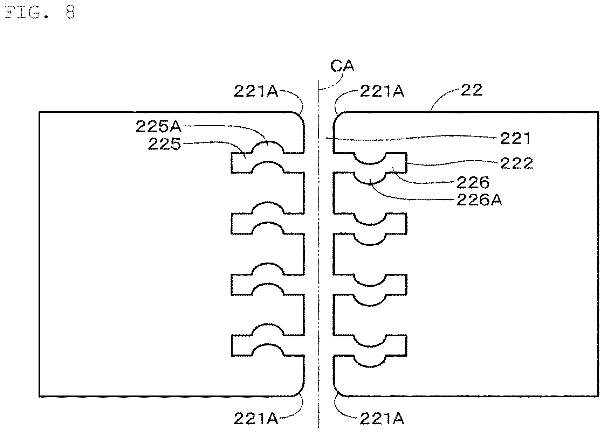

A variation of the slit of the metal plate 22 will be described with reference to FIGS. 8 to 10. As illustrated in FIG. 8, the second slit 222 includes a first extending portion 225 extending to one side (left side in FIG. 8) with the first slit 221 as a boundary, and a second extending portion 226 extending to another side (right side in FIG. 8) with the first slit 221 as a boundary. The first extending portion 225 has a first projecting portion 225A that projects in an extending direction of the first slit 221 (to the upper side in FIG. 8), and the second extending portion 226 has a second projecting portion 226A that projects in a direction opposite to the first projecting portion 225A (to the lower side in FIG. 8). According to a shape of the scale-like slit according to the present variation, it is possible to improve followability of the metal plate 22 not only to deformation in the longitudinal and lateral directions on the peripheral surface 21C of the cell 21 but also to deformation in an oblique direction. Therefore, followability of the metal plate 22 to deformation of the cell 21 can be further improved.

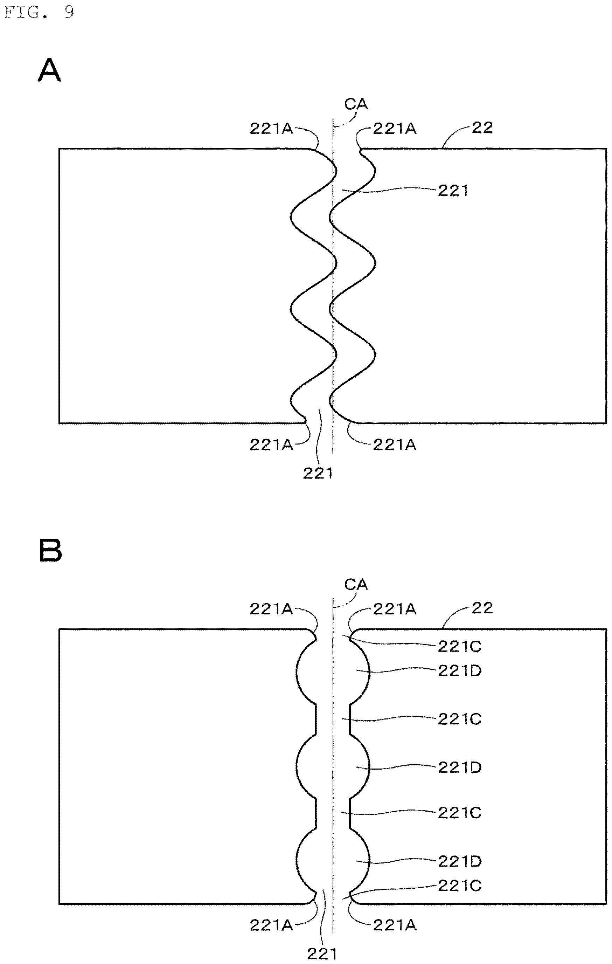

The metal plate 22 may have a shape without the second slit 222. In this case, as illustrated in FIG. 9A, the first slit 221 may have a linear shape and a meandering shape. Further, as illustrated in FIG. 9B, the first slit 221 may have a shape in which a linear shape 221C and a circular shape 221D are alternately formed. According to a shape of the slit according to the present variation, the slit slightly extends also in the lateral direction (direction orthogonal to the central axis CA), and the second slit 222 is not provided, so that a contact area between the metal plate 22 and the peripheral surface 21C of the cell 21 can be increased. Therefore, it is possible to improve heat conduction efficiency by the metal plate 22 while maintaining followability of the metal plate 22 to a shape change of the cell 21 as much as possible.

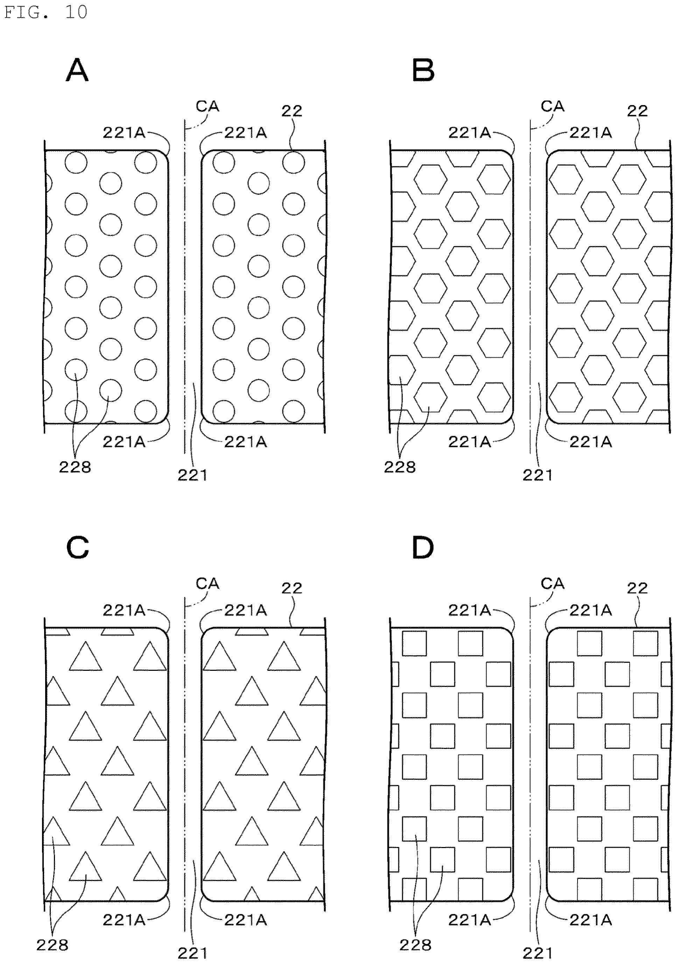

The metal plate 22 may have a shape having a through hole 228 punched into a predetermined shape around the first slit 221. A shape of the through hole 228 may be a circular shape as illustrated in FIG. 10A, a hexagonal shape as illustrated in FIG. 10B, a triangular shape as illustrated in FIG. 10C, or a rectangular shape as illustrated in FIG. 10D.

### [Other variations]

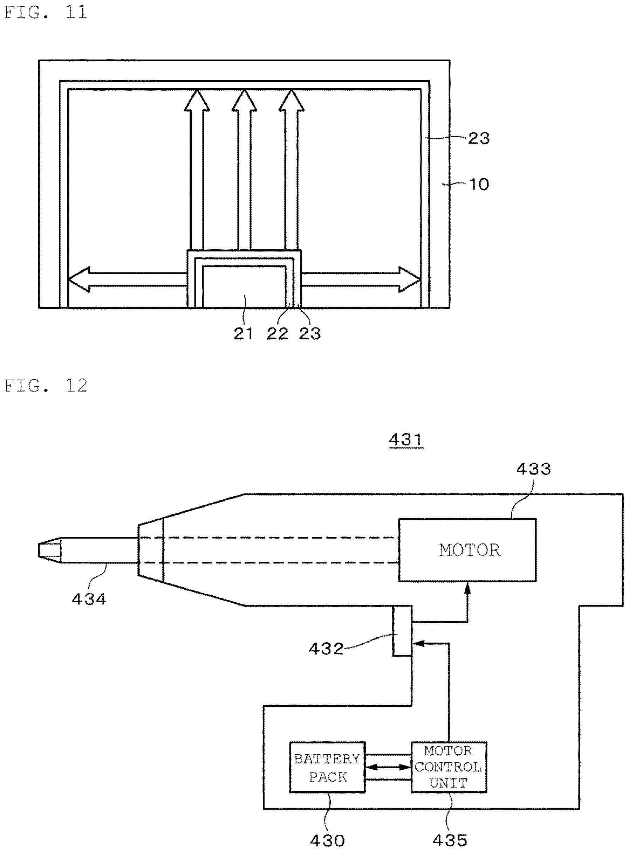

As schematically illustrated in FIG. 11, the heat dissipation diffusion coating material 23 may be applied to a part or the whole of an inner surface of the exterior case 10. By provision of a coating film of the heat dissipation diffusion coating material 23 on the exterior case 10, emissivity (a rate of absorption or emission of an infrared ray) of the exterior case 10 can be made large. That is, heat absorption can be made large. Therefore, heat generated from the cell 21 and diffused into the exterior case 10 via the battery holder 30 can be effectively absorbed by the exterior case 10, and heat can be effectively transferred to the exterior case 10 which is a contact portion with outside air. Therefore, heat can be effectively dissipated to outside air, and a system capable of passive and sustainable heat circulation can be realized. Note that, in FIG. 11, illustration of the battery holder and the like is omitted as appropriate, and illustration is simplified.

A part or the whole of a surface of the tab 41 and the tab 42 connected to a terminal portion of the cell 21 may be covered with the heat dissipation diffusion coating material 23. A part or the whole of a surface of the battery holder 30 may be covered with the heat dissipation diffusion coating material 23. By the above, heat can be effectively diffused to the exterior case 10. Note that the entire outer surface of the metal plate 22 is preferably covered with the heat dissipation diffusion coating material 23, but the configuration may be such that a part of the outer surface of the metal plate 22 is covered with the heat dissipation diffusion coating material 23, or the outer surface of the metal plate 22 is not covered with the heat dissipation diffusion coating material 23.

As in the embodiment, the metal plate 22 is preferably attached to an individual one of the cells 21 and the metal plate 22 is preferably covered with the heat dissipation diffusion coating material 23. However, the configuration may be such that a plurality, such as two, of the cells 21 are configured as one set, one of the metal plates 22 is attached to one set of the cells 21, and the metal plate 22 is covered with the heat dissipation diffusion coating material 23. In this case, an insulating member may be arranged between one set of the cells 21.

The matters described in the above-described embodiment and variation can be appropriately combined. Further, the materials, processes, and the like described in the embodiment are merely examples, and the content of the present invention is not limited to the exemplified materials and the like.

### <Application example>

The battery pack according to the present invention can be mounted on an electric tool, an electric vehicle, various electronic devices, or the like, or can be used for supplying electric power. Hereinafter, a specific application example will be described.

### (Electric tool)

An example of an electric driver as an electric tool to which the present invention can be applied will be schematically described with reference to FIG. 12. An electric driver 431 is provided with a motor 433 that transmits rotation power to a shaft 434 and a trigger switch 432 to be operated by the user. A battery pack 430 and a motor control unit 435 are accommodated in a lower housing of a handle of the electric driver 431. The battery pack 430 is built in the electric driver 431 or is detachably mounted in the electric driver 431. The above-described battery pack can be applied to the battery pack 430.

Each of the battery pack 430 and the motor control unit 435 may be provided with a microcomputer (not illustrated) so that charge and discharge information of the battery pack 430 can be communicated with each other. The motor control unit 435 can control operation of the motor 433 and cut off power supply to the motor 433 when there is an abnormality such as over discharge.

### (Power storage system for electric vehicle)

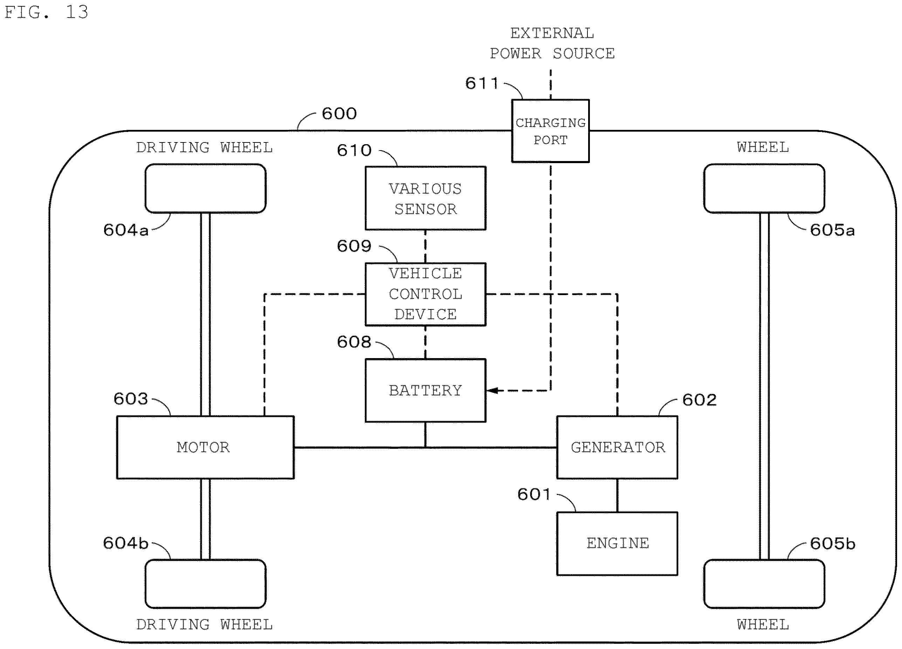

As an example in which the present invention is applied to a power storage system for an electric vehicle, FIG. 13 schematically illustrates a configuration example of a hybrid vehicle (HV) employing a series hybrid system. The series hybrid system is a vehicle that runs by an electric power driving force conversion device using electric power generated by a generator powered by an engine or such electric power temporarily stored in a battery.

A hybrid vehicle 600 is mounted with an engine 601, a generator 602, an electric power driving force conversion device (a DC motor or an AC motor; hereinafter, simply referred to as "motor 603"), a driving wheel 604a, a driving wheel 604b, a wheel 605a, a wheel 605b, a battery 608, a vehicle control device 609, various sensors 610, and a charging port 611. As the battery 608, the battery pack of the present invention can be applied.

The motor 603 is operated by electric power of the battery 608, and a rotational force of the motor 603 is transmitted to the driving wheels 604a and 604b. Electric power generated by the generator 602 by a rotational force generated by the engine 601 can be stored in the battery 608. The various sensors 610 control an engine speed using the vehicle control device 609 and control an opening degree of a throttle valve (not illustrated).

When the hybrid vehicle 600 is decelerated by a braking mechanism (not illustrated), a resistance force during the deceleration is applied to the motor 603 as a rotational force, and regenerative power generated by this rotational force is stored in the battery 608. The battery 608 can be charged by being connected to an external power source through the charging port 611 of the hybrid vehicle 600. Such an HV vehicle is referred to as a plug-in hybrid vehicle (PHV or PHEV).

Note that the battery pack (specifically, the cell and the metal plate covered with the heat dissipation diffusion coating material according to the present invention) can also be applied to a downsized primary battery and used as a power supply of a tire pressure monitoring system (TPMS) built in wheels 604 and 605.

Although the series hybrid vehicle is described above as an example, the present invention is also applicable to a parallel system using an engine and a motor together or a hybrid vehicle combining a series system and a parallel system. Furthermore, the present invention is also applicable to an electric vehicle (EV or BEV) and a fuel cell vehicle (FCV) that runs only by a drive motor without using an engine.

### DESCRIPTION OF REFERENCE SYMBOLS

10: Exterior case
20: Battery unit
21: Cell
21A: Positive electrode terminal
21B: Negative electrode terminal
21C: Peripheral surface
22: Metal plate
23: Heat dissipation diffusion coating material
30: Battery holder
41, 42: Tab
100: Battery pack
221: First slit
221A: Rounded portion
221C: Linear shape
221D: Circular shape
222: Second slit
225: First extending portion
225A: First projecting portion
226: Second extending portion
226A: Second projecting portion
228: Through hole
CA: Central axis

## Claims

1. A battery pack comprising:
a battery unit including one or a plurality of cells;
an exterior case that accommodates the battery unit; and
a battery holder made from resin, wherein
the battery holder includes a cell accommodating portion that accommodates the cell,
a metal plate is interposed between an inner surface of the cell accommodating portion and the cell, and
the metal plate is attached to the cell so as to cover a part of a peripheral surface of the cell.

2. The battery pack according to claim 1, wherein the metal plate has a first slit extending in a direction along a central axis of the cell.

3. The battery pack according to claim 2, wherein the first slit has a linear shape and a meandering shape.

4. The battery pack according to claim 2, wherein the first slit has a shape in which a linear shape and a circular shape are alternately formed.

5. The battery pack according to claim 2, wherein the metal plate has a through hole punched into a predetermined shape around the first slit.

6. The battery pack according to claim 2, wherein the metal plate has a second slit extending in a direction substantially orthogonal to an extending direction of the first slit.

7. The battery pack according to claim 6, wherein the metal plate has a plurality of the second slits formed at substantially equal intervals.

8. The battery pack according to claim 6 or 7, wherein
the second slit has a first extending portion extending to one side with the first slit as a boundary and a second extending portion extending to another side with the first slit as a boundary,
the first extending portion has a first projecting portion that projects in an extending direction of the first slit, and
the second extending portion has a second projecting portion that projects in a direction opposite to the first projecting portion.

9. The battery pack according to any of claims 2 to 8,
wherein an end portion of the first slit is chamfered.

10. The battery pack according to any of claims 1 to 9,
wherein the metal plate is made from any of aluminum, gold, silver, copper, and an alloy containing at least one of these types of metal.

11. The battery pack according to any of claims 1 to 10, wherein an outer surface of the metal plate is covered with a heat dissipation diffusion coating material.

12. The battery pack according to claim 11, wherein at least a part of an inner surface of the exterior case is covered with the heat dissipation diffusion coating material.

13. The battery pack according to claim 11 or 12, wherein the heat dissipation diffusion coating material is obtained by adding a heat dissipation powder filler to resin dissolved in a solvent.

14. The battery pack according to claim 13, wherein resin contained in the heat dissipation diffusion coating material is acrylic resin or fluorine-based resin.

15. The battery pack according to claim 13 or 14, wherein the heat dissipation powder filler is a ceramic-based filler.

16. The battery pack according to any of claims 11 to 15, wherein a part or whole of a surface of at least one of a tab connected to a terminal portion of the cell and the battery holder is covered with the heat dissipation diffusion coating material.

17. An electric tool comprising the battery pack according to any of claims 1 to 16.

18. An electric vehicle comprising the battery pack according to any of claims 1 to 16.
